# FASCICULE DE BREVET EUROPEEN

(11) **EP 3 090 853 B1**
(45) Date de publication et mention de la délivrance du brevet: **01.08.2018**
(21) Numéro de dépôt: 16167960.0
(22) Date de dépôt: 02.05.2016
(51) Int. Cl.: B29C 45/00, B29C 45/17, B29C 45/38

(54) **PROCÉDÉ DE FABRICATION D'UNE PIÈCE PLASTIQUE, ET DISPOSITIF ASSOCIÉ**
HERSTELLUNGSVERFAHREN EINES PLASTIKTEILS, UND ENTSPRECHENDE VORRICHTUNG
METHOD FOR PRODUCING A PLASTIC PART, AND RELATED APPARATUS

(30) Priorité: 06.05.2015 FR 1554060
(43) Date de publication de la demande: 09.11.2016
(73) Titulaire: Flex-N-Gate France, 25405 Audincourt (FR)
(72) Inventeur: NELH, Frédéric, 25200 MONTBELIARD (FR)
(74) Mandataire: Lavoix

(56) Documents cités:
- EP-A2- 1 188 538
- DE-A1-102005 053 735
- DE-A1-102009 012 287
- JP-A- S62 116 123

## Description

La présente invention concerne un procédé de fabrication d'une pièce plastique. L'invention concerne également un dispositif de fabrication d'une pièce plastique.

Le document CN684200522 U décrit une structure capable de découper le seuil d'injection après une étape d'injection du plastique. Document JP S 62 116 123 A divulgue un procédé de fabrication d'une pièce en plastique, mettant en oeuvre un moule d'injection comprenant des première et deuxième parties définissant entre elles une cavité de moulage et un chariot comprenant une lame, le chariot et la deuxième partie définissant entre eux un canal d'injection, le canal d'injection comprenant une entrée de matière, la cavité de moulage et le canal d'injection communiquant en une zone de contact, le procédé comprenant les étapes suivantes :- injection de plastique dans le canal d'injection et la cavité de moulage par l'entrée de matière,- déplacement du chariot, la lame découpant le plastique à la zone de contact, le plastique injecté dans la cavité de moulage et le plastique injecté dans le canal d'injection étant séparés après le déplacement du chariot, le plastique précédemment injecté dans le canal d'injection restant en contact avec le chariot.

Autres procédés de fabrication des pièces plastiques sont divulgués dans les documents EP 1 188 538 A2, DE 10 2009 012287 A1 et DE 10 2005 053735 A1. Le seuil d'injection est le point où le plastique pénètre dans la cavité du moule pour former la pièce. La pièce en plastique comprend souvent des imperfections au seuil d'injection, comme un surplus de matière provenant de l'entrée de matière.

Cependant, le plastique découpé forme des chutes. La structure décrite ne permet pas la récupération de ces chutes.

Une autre technique est de supprimer les défauts liés au seuil d'injection manuellement après l'injection de plastique. Cependant, cette étape est très dangereuse pour les opérateurs, notamment à cause des outils tranchants utilisés. De plus, cette technique allonge le temps nécessaire à la production d'une pièce.

Un but de l'invention est donc de fournir un procédé efficace pour la fabrication d'une pièce plastique, capable de supprimer les défauts liés au seuil d'injection en maîtrisant les chutes.

A cet effet, l'invention a pour objet un procédé selon la revendication 1. Selon des modes de réalisation particuliers de l'invention, le procédé présente l'une ou plusieurs caractéristiques suivantes, prise(s) isolément ou suivant toute(s) combinaison(s) techniquement possible(s) :
- le chariot comprend un mécanisme poussoir et le procédé comprend une étape d'éjection du plastique précédemment injecté dans le canal d'injection par le mécanisme poussoir après l'étape de déplacement du chariot ;
- la deuxième partie du moule d'injection est éloignée de la première partie du moule d'injection avant l'étape d'éjection ;
- le mécanisme poussoir comprend une tige s'étendant entre deux extrémités, une première extrémité de la tige délimitant partiellement le canal d'injection, la tige étant poussée en une deuxième extrémité par un actionneur pendant l'étape d'éjection ;
- le déplacement du chariot place la tige dans le prolongement de l'actionneur ;
- un ressort est monté autour de la tige, l'actionneur comprimant le ressort pendant l'étape d'éjection ;
- le plastique précédemment injecté dans le canal d'injection est réutilisé après l'étape d'éjection ; et
- le canal d'injection est creusé dans le chariot.

L'invention a en outre pour objet un dispositif de fabrication d'une pièce en plastique selon la revendication 9. Selon des modes de réalisation particuliers de l'invention, le dispositif présente l'une ou plusieurs caractéristiques suivantes, prise(s) isolément ou suivant toute(s) combinaison(s) techniquement possible(s) :
- le chariot comprend un mécanisme poussoir apte à éjecter de la matière préalablement injectée dans le canal d'injection ;
- le mécanisme poussoir comprend une tige s'étendant entre deux extrémités, une première extrémité de la tige délimitant partiellement le canal d'injection, la tige étant apte à être poussée en une deuxième extrémité par un actionneur.

D'autres caractéristiques et avantages de l'invention apparaîtront à la lecture de la description qui va suivre, donnée uniquement à titre d'exemple et faite en se référant aux dessins annexés sur lesquels :
- la figure 1 est une vue en coupe d'une étape d'injection de plastique, selon un mode de réalisation de l'invention,
- la figure 2 est une vue en coupe similaire à la figure 1 d'une étape de déplacement du chariot, et
- la figure 3 est une vue en coupe similaire à la figure 1 d'une étape d'éjection du plastique.

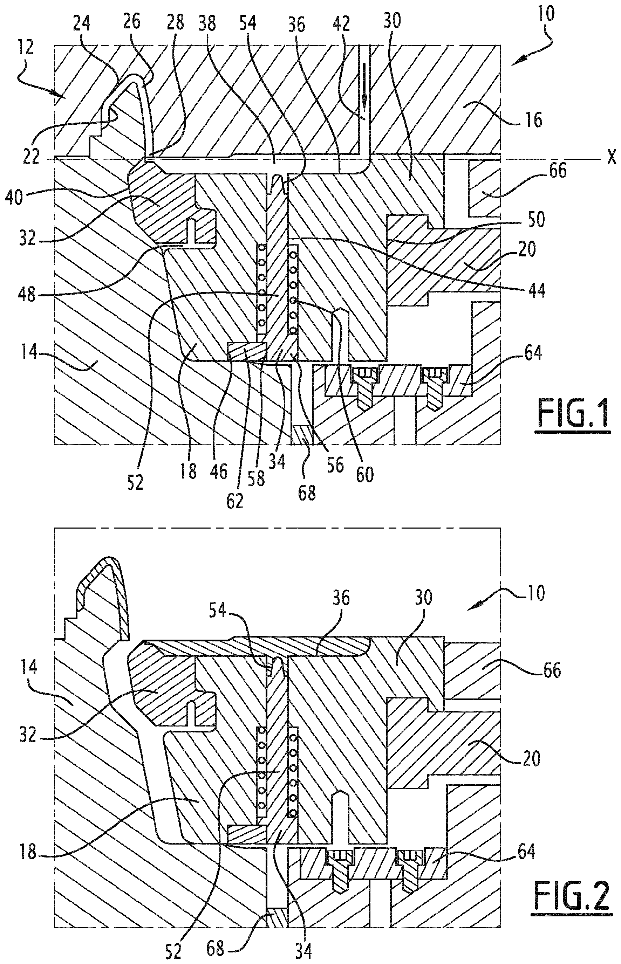

Un dispositif 10 pour la fabrication de pièce plastique est représenté sur les figures 1 à 3.

Le dispositif 10 comprend un moule 12.

Le moule 12 comprend une première partie 14, une deuxième partie 16 et un chariot 18.

Le dispositif 10 comprend, en outre, un cylindre 20, agencé pour déplacer le chariot 18.

Les première et deuxième parties 14, 16 comprennent chacune une surface intérieure 22, 24.

Dans un mode de réalisation, les surfaces intérieures 22, 24 sont lisses. En variante, au moins une des surfaces intérieures 22, 24 est grainée.

La deuxième partie 16 est apte à être écartée de la première partie 14. Lorsque la deuxième partie 16 est en contact avec la première partie 14, le moule 12 est fermé. Sinon, le moule 12 est ouvert.

Lorsque le moule 12 est fermé, les surfaces intérieures 22, 24 des première et deuxième parties 14, 16 délimitent une cavité de moulage 26.

La cavité de moulage 26 a la forme de la pièce en plastique que l'on souhaite réaliser.

La cavité de moulage 26 est fermée à l'exception d'un orifice, appelé zone de contact 28.

Le chariot 18 comprend un corps 30 portant une lame 32. Il comporte également un mécanisme poussoir 34.

Le chariot 18 présente une surface intérieure 36.

La surface intérieure 36 du chariot 18 est formée par une partie du corps 30, de la lame 32 et du mécanisme poussoir 34.

Le chariot 18 est apte à être déplacé entre une position de moulage et une position de retrait.

Dans la position de moulage, le chariot 18 et la deuxième partie 16 définissent entre eux un canal d'injection 38, ici lorsque le moule 12 est fermé. Le canal d'injection 38 et la cavité de moulage 26 communiquent en la zone de contact 28.

Le chariot 18 est en contact avec la première partie 14.

Plus particulièrement, la lame 32 du chariot 18 est en contact avec la première partie 14 au niveau de la zone de contact 28. La lame 32 comprend une surface 40 complémentaire d'une surface de la première partie 14.

Les surfaces intérieures 24, 36 de la deuxième partie 16 et du chariot 18 délimitent le canal d'injection 38, lorsque le moule 12 est fermé.

Le canal d'injection 38 comporte une entrée de matière 42.

L'entrée de matière 42 est ménagée dans la deuxième partie 16, et débouche au niveau de la surface intérieure 24.

L'entrée de matière 42 débouche face au chariot 18.

Le canal d'injection 38 est fermé à l'exception de la zone de contact 28 et de l'entrée de matière 42.

Le canal d'injection 38 a par exemple une forme allongée selon un axe principal X entre l'entrée de matière 42 et la zone de contact 28.

Le canal d'injection 38 a une largeur plus importante au niveau de la zone de contact 28 qu'au niveau de l'entrée de matière 42, la largeur étant prise perpendiculairement à l'axe principal X du canal d'injection 38. Le canal d'injection 38 a, par exemple, une largeur égale à 10 mm à 5% près au niveau de l'entrée de matière 42. Le canal d'injection a, par exemple, une largeur comprise entre 20 mm et 25 mm au niveau de la zone de contact 28.

Dans un mode de réalisation, la surface intérieure 24 de la deuxième partie 16 est sensiblement plane. Le canal d'injection 38 est creusé dans le corps 30 du chariot 18.

Dans la position de retrait, la cavité de moulage 26 et le canal d'injection 38 sont séparés. Ils ne communiquent plus l'un avec l'autre.

Le chariot 18 et la première partie 14 ne sont plus en contact. Le chariot 18 et la première partie 14 du moule 12 sont écartés d'une distance supérieure à 25 mm.

La position de retrait correspond à une translation selon un axe du chariot 18 par rapport à la position de moulage.

La translation s'effectue, par exemple, sensiblement selon l'axe principal X du canal d'injection.

Pendant la translation, la lame 32 parcourt la zone de contact 28 pendant le déplacement du chariot 18.

Le corps 30 est une forme pleine définissant un orifice traversant 44.

L'orifice traversant 44 débouche de part et d'autre du corps 30. L'orifice traversant 44 débouche d'un côté au niveau de la surface intérieure 36 du chariot 18.

L'orifice traversant 44 a la forme de deux cylindres, par exemple à base circulaire, successifs et ayant la même directrice. Un premier cylindre, débouchant au niveau de la surface intérieure 36 du chariot 18, a une base circulaire incluse dans celle du deuxième cylindre. Le deuxième cylindre comprend une excroissance 46.

Le corps 30 délimite un volume 48 configuré pour accueillir la lame 32. Le volume 48 configuré pour accueillir la lame 32 est situé entre le corps 30 et la première partie 14.

Le corps 30 est prévu pour être monté sur le cylindre 20. Le corps 30 comprend une zone de connexion 50 avec le cylindre 20.

Le corps 30 est réalisé en acier.

La lame 32 est prévue pour découper du plastique.

La lame 32 comprend une partie prévue pour couper le plastique. La partie prévue pour couper le plastique est située au niveau de la zone de contact 28.

La lame 32 est montée sur le corps 30 au niveau du volume 48 configuré pour accueillir la lame 32. La lame 32 a une forme complémentaire du volume 48.

La lame 32 est réalisée en acier dur.

Le mécanisme poussoir 34 comprend une tige 52.

La tige 52 s'étend entre une première extrémité 54 et une deuxième extrémité 56.

La première extrémité 54 délimite partiellement le canal d'injection 38. La première extrémité 54 forme une partie de la surface intérieure 36 du chariot 18.

La tige 52 est apte à être poussée en sa deuxième extrémité 56.

La tige 52 s'étend selon un axe principal.

La tige 52 est au moins partiellement dans l'orifice traversant 44.

La tige 52 est configurée pour se déplacer longitudinalement dans l'orifice traversant 44.

La tige 52 a une forme au moins partiellement complémentaire de l'orifice traversant 44 du corps 30.

La tige 52 a une longueur sensiblement égale à celle de l'orifice traversant 44.

Entre les première et deuxième extrémités 54, 56, la tige 52 a la forme d'un cylindre à base circulaire, plus particulièrement ayant une base circulaire sensiblement identique à celle du premier cylindre de l'orifice traversant 44.

A la première extrémité 54, la tige 52 s'affine.

A la deuxième extrémité 56, la tige 52 a la forme d'un cylindre à base circulaire, plus particulièrement ayant une base circulaire sensiblement identique à celle du deuxième cylindre de l'orifice traversant 44.

A la deuxième extrémité 56, la tige 52 délimite un trou 58. Le trou 58 est radial.

Le mécanisme poussoir 34 comporte encore un ressort 60.

Le ressort 60 est monté autour de la tige 52.

Le ressort 60 se situe dans l'orifice traversant 44, entre la tige 52 et le corps 30. Le ressort 60 est compris dans le deuxième cylindre de l'orifice traversant 44.

Le ressort 60 s'étend entre deux extrémités. En une extrémité, le ressort 60 est bloqué par le corps 30. En l'autre extrémité, le ressort 60 est bloqué par la deuxième extrémité 56 de la tige 52.

Le ressort 60 travaille en compression.

Le mécanisme poussoir 34 comporte encore une cale 62.

La cale 62 est un pion monté sur le corps 30. La cale 62 s'étend depuis l'excroissance 46 du trou traversant 44.

La cale 62 limite le mouvement de la tige 52 au sein de l'orifice traversant 44.

La tige 52 est apte à se déplacer entre deux positions extrêmes : une position rentrée et une position d'éjection.

Dans la position rentrée, la deuxième extrémité 56 de la tige 52 est contre la cale 62. Plus particulièrement, le trou 58 communique avec l'excroissance 46 de l'orifice traversant 44. La cale 62 s'étend dans le trou 58 et l'excroissance 46.

Dans la position d'éjection, la deuxième extrémité 56 de la tige 52 est écartée de la cale 62. Le ressort 60 est plus comprimé que dans la position rentrée.

Dans un mode de réalisation, la position d'éjection correspond à la compression minimale du ressort 60 pour laquelle le ressort 60 n'est pas déformé irréversiblement.

Entre la position rentrée et la position d'éjection, le ressort 60 a un comportement élastique, c'est-à-dire qu'il n'est pas irréversiblement déformé.

Le cylindre 20 est prévu pour déplacer le chariot 18 entre la position de moulage et la position de retrait.

Le cylindre 20 est relié au chariot, plus particulièrement à la zone de connexion 50 avec le cylindre 20.

La zone de connexion 50 est prévue pour maintenir le cylindre 20 et le chariot 18 solidaires. La zone de connexion 50 a par exemple une forme complémentaire du cylindre 20, dans laquelle vient s'emboîter le cylindre 20.

Le cylindre 20 est par exemple un vérin. Le vérin est hydraulique, pneumatique, manuel avec un système vis-écrou ou électrique.

Le dispositif 10 comprend encore une plaque de guidage 64 prévue pour guider le chariot 18 pendant le passage de la position de moulage à la position de retrait, et inversement.

La plaque de guidage 64 est fixée à une structure immobile par rapport à la première partie 14 du moule 12.

La plaque de guidage 64 s'étend partiellement le long du chariot 18. La plaque de guidage 64 est espacée du chariot 18.

En variante, la plaque de guidage 64 est en contact avec le chariot 18, le contact entre la plaque de guidage 64 et le chariot 18 n'empêchant pas la translation, par exemple à cause de frottements.

La plaque de guidage 64 s'étend, par exemple le long d'au moins deux surfaces du chariot 18 parallèles à l'axe de la translation et non alignées.

La plaque de guidage 64 est réalisée en bronze.

Le dispositif 10 comporte par ailleurs une butée 66 qui limite la translation du chariot 18.

La butée 66 est, par exemple, une forme pleine située du côté du chariot 18 à l'opposé de la cavité de moulage 26.

En position de retrait, le chariot 18 est en contact avec la butée 66.

La butée 66 est réalisée en acier inoxydable.

La butée 66 est par exemple d'une pièce avec la première partie 14 du moule 12. Dans ce cas, en position de retrait, le chariot 18 est au contact de la première partie 14 du moule 12 au niveau de la butée 66, mais le chariot 18 n'est pas au contact de la partie de la première partie 14 du moule 12 définissant la cavité de moulage 26.

Le dispositif 10 comprend un actionneur 68, prévu pour activer le mécanisme poussoir 34. L'actionneur 68 est apte à déplacer la tige 52 de la position rentrée à la position d'éjection.

L'actionneur 68 est prévu pour être apte à exercer une force sur la deuxième extrémité 56 de la tige 52 parallèlement à l'axe principal de la tige 52.

L'actionneur 68 est, par exemple, une barre apte à se déplacer dans un orifice.

L'actionneur 68 est aligné avec la tige 52, lorsque le chariot 18 est en position de retrait.

L'actionneur 68 vient appuyer sur la deuxième extrémité 56 de la tige 52 selon l'axe principal de la tige 52 pour déplacer la tige 52 de la position rentrée à la position d'éjection.

Un procédé de fabrication d'une pièce plastique va maintenant être décrit. Le procédé de fabrication peut être mis en oeuvre par le dispositif 10 décrit précédemment.

Le procédé de fabrication comprend les étapes suivantes :
- une étape d'injection de plastique, et
- une étape de déplacement du chariot 18.

Le procédé de fabrication comprend en outre, typiquement, une étape d'éjection.

Au début de l'étape d'injection du plastique, le chariot 18 est en position de moulage, le moule 12 est fermé et le mécanisme poussoir 34 est en position rentrée.

Le moule 12 définit une cavité de moulage 26 et un canal d'injection 38. La cavité de moulage 26 et le canal d'injection 38 communiquent par la zone de contact 28.

Pendant l'étape d'injection de plastique, représenté à la figure 1, du plastique est injecté par l'entrée de matière 42 dans le canal d'injection 38. Une partie du plastique pénètre dans la cavité de moulage 26 par la zone de contact 28.

Le plastique injecté est par exemple préalablement chauffé à une température adaptée pour liquéfier le plastique.

Lorsque la cavité de moulage 26 et le canal d'injection 38 sont remplis, du plastique cesse d'être injecté par l'entrée de matière 42 et l'étape d'injection de plastique prend fin.

On considère par exemple que la cavité de moulage 26 et le canal d'injection 38 sont remplis lorsqu'une certaine quantité de plastique a été injectée.

Le procédé comprend typiquement une étape d'attente après l'étape d'injection de plastique.

L'étape d'attente est prévue pour permettre la solidification du plastique injecté dans la cavité de moulage 26 et le canal d'injection 38 à l'étape d'injection de plastique.

Pendant l'étape d'attente, le moule 12 est, par exemple, thermorégulé à une température inférieure à la température de solidification du plastique.

L'étape d'attente dure au moins 20 secondes et, plus particulièrement, a une durée comprise entre 25 et 30 secondes.

A la fin de l'étape d'attente, le plastique préalablement injecté s'est solidifié.

Le procédé comprend typiquement une étape d'ouverture du moule 12 après l'étape d'attente.

En variante, l'étape d'ouverture du moule 12 se déroule avant l'étape d'attente.

Pendant l'étape d'ouverture du moule 12, la deuxième partie 16 du moule 12 s'écarte de la première partie 14 du moule 12. La deuxième partie 16 s'écarte également du chariot 18.

Le plastique préalablement injecté reste en contact avec la première partie 14 et le chariot 18.

Le plastique préalablement injecté est alors accessible.

L'étape de déplacement du chariot 18 se déroule après l'étape d'attente.

Dans un mode de réalisation, l'étape de déplacement du chariot 18 se déroule après l'étape d'ouverture du moule 12.

En variante, l'étape de déplacement du chariot 18 se déroule avant l'étape d'ouverture du moule 12, le chariot 18 étant apte à être déplacé lorsque le moule est fermé.

Au début de l'étape de déplacement du chariot 18, le mécanisme poussoir 34 est en position rentrée et le chariot 18 est en position de moulage.

Pendant l'étape de déplacement du chariot 18, le cylindre 20 déplace le chariot 18 de la position de moulage à la position de retrait.

La lame 32 du chariot 18 découpe le plastique au niveau de la zone de contact 28.

A la fin de l'étape de déplacement du chariot 18, le plastique injecté dans la cavité de moulage 26 et le plastique injecté dans le canal d'injection 38 sont séparés.

Le plastique injecté dans la cavité de moulage 26 reste en contact avec la première partie 14 du moule.

Le plastique injecté dans le canal d'injection 38 reste en contact avec le chariot 18.

Le déplacement du chariot 18 place la tige 52 dans le prolongement de l'actionneur 68.

L'étape d'éjection se déroule après l'ensemble des étapes décrites précédemment.

Au début de l'étape d'éjection, le moule 12 est ouvert, le mécanisme poussoir 34 est en position rentrée et le chariot 18 est en position de retrait, comme représenté à la figure 2.

Pendant l'étape d'éjection, l'actionneur 68 active le mécanisme poussoir 34.

L'actionneur 68 pousse la tige 52 en sa deuxième extrémité 56. Le ressort 60 se comprime.

Le mécanisme poussoir 34 passe de la position rentrée à la position d'éjection.

Le plastique injecté dans le canal d'injection 38 est déplacé par le mécanisme poussoir 34.

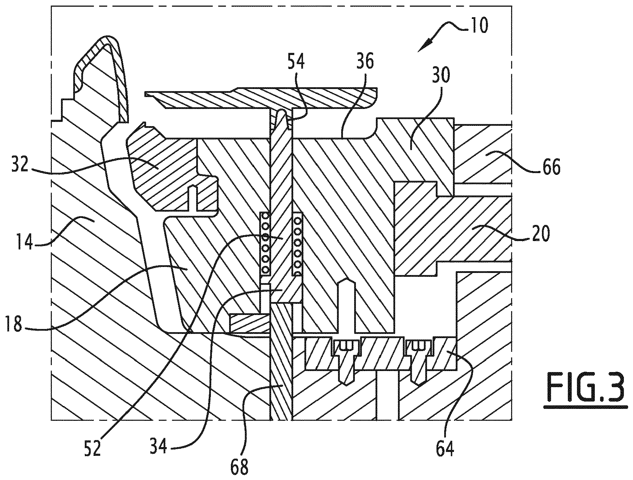

A la fin de l'étape d'éjection, comme représenté à la figure 3, le plastique injecté dans le canal d'injection 38 est en contact avec la première extrémité 54 de la tige 52. Le plastique injecté dans le canal d'injection 38 n'est plus en contact avec le corps 30 et la lame 32 du chariot 18.

Le plastique injecté dans le canal d'injection 38 est ainsi facilement récupérable. Il peut être réutilisé ultérieurement pour le moulage d'autres pièces en plastique.

Le plastique injecté dans la cavité de moulage 26 encore en contact avec la première partie 14 forme la pièce en plastique produite.

Ce procédé permet de ne pas avoir d'imperfections au niveau du seuil d'injection sur la pièce produite. En effet, pendant le déplacement du chariot 18, la lame 32 découpe le plastique là où il a pénétré dans la cavité de moulage 26.

Cela permet de gagner du temps par rapport à une technique qui consisterait à supprimer les défauts du seuil d'injection par la suite.

De plus, ce procédé n'est pas nécessairement plus cher à mettre en oeuvre qu'un simple procédé d'injection, l'outillage permettant la suppression du seuil d'injection étant compris dans le moule.

Enfin, ce procédé permet de récupérer les déchets de plastique liés à la découpe du seuil d'injection et de collecter de manière organisée les déchets. Le plastique précédemment injecté dans le canal d'injection peut être réutilisé ensuite.

## Revendications

1. Procédé de fabrication d'une pièce en plastique, mettant en oeuvre un moule d'injection (12) comprenant des première (14) et deuxième (16) parties définissant entre elles une cavité de moulage (26) et un chariot (18) comprenant une lame (32), le chariot comprenant un corps (30), le corps (30) délimitant un volume (48) configuré pour accueillir la lame (32) et la lame (32) étant montée sur le corps (30) au niveau du volume (48), le chariot (18) et la deuxième partie (16) définissant entre eux un canal d'injection (38), le canal d'injection (38) comprenant une entrée de matière (42), la cavité de moulage (26) et le canal d'injection (38) communiquant en une zone de contact (28), le procédé comprenant les étapes suivantes :
- injection de plastique dans le canal d'injection (38) et la cavité de moulage (26) par l'entrée de matière (42),
- déplacement du chariot (18), la lame (32) découpant le plastique à la zone de contact (28), le plastique injecté dans la cavité de moulage (26) et le plastique injecté dans le canal d'injection (38) étant séparés après le déplacement du chariot (18), le plastique précédemment injecté dans le canal d'injection (38) restant en contact avec le chariot (18),
le procédé mettant en outre en oeuvre une plaque de guidage (64) prévue pour guider le chariot (18) pendant le déplacement, la plaque de guidage (64) étant fixée à une structure immobile par rapport à la première partie (14) du moule.

2. Procédé selon la revendication 1, **caractérisé en ce que** le chariot (18) comprend un mécanisme poussoir (34) et **en ce que** le procédé comprend une étape d'éjection du plastique précédemment injecté dans le canal d'injection (38) par le mécanisme poussoir (34) après l'étape de déplacement du chariot (18).

3. Procédé selon la revendication 2, **caractérisé en ce que** la deuxième partie (16) du moule d'injection (12) est éloignée de la première partie (14) du moule d'injection (12) avant l'étape d'éjection.

4. Procédé selon la revendication 2 ou 3, **caractérisé en ce que** le mécanisme poussoir (34) comprend une tige (52) s'étendant entre deux extrémités (54, 56), une première extrémité (54) de la tige (52) délimitant partiellement le canal d'injection (38), la tige (52) étant poussée en une deuxième extrémité (56) par un actionneur (68) pendant l'étape d'éjection.

5. Procédé selon la revendication 4, **caractérisé en ce que** le déplacement du chariot (18) place la tige (52) dans le prolongement de l'actionneur (68).

6. Procédé selon la revendication 4 ou 5, **caractérisé en ce qu'**un ressort (60) est monté autour de la tige (52), l'actionneur (68) comprimant le ressort (60) pendant l'étape d'éjection.

7. Procédé selon l'une quelconque des revendications 2 à 6, **caractérisé en ce que** le plastique précédemment injecté dans le canal d'injection (38) est réutilisé après l'étape d'éjection.

8. Procédé selon l'une quelconque des revendications précédentes, **caractérisé en ce que** le canal d'injection (38) est creusé dans le chariot (18).

9. Dispositif de fabrication d'une pièce en plastique apte à mettre en oeuvre le procédé selon la revendication 1, comprenant un moule d'injection (12) comprenant des première (14) et deuxième (16) parties définissant entre elles une cavité de moulage (26) et un chariot (18) comprenant une lame (32), le chariot comprenant un corps (30), le corps (30) délimitant un volume (48) configuré pour accueillir la lame (32) et la lame (32) étant montée sur le corps (30) au niveau du volume (48), le chariot (18) étant apte à se déplacer entre les positions suivantes :
- une position de moulage, dans laquelle le chariot (18) et la deuxième partie (16) définissent entre eux un canal d'injection (38), le canal d'injection (38) comprenant une entrée de matière (42), la cavité de moulage (26) et le canal d'injection (38) communiquant en une zone de contact (28), et
- une position de retrait, dans laquelle la cavité de moulage (26) et le canal d'injection (38) sont séparés,
la lame (32) parcourant la zone de contact (28) pendant le déplacement du chariot (18),
le dispositif comprenant une plaque de guidage (64) prévue pour guider le chariot (18) pendant le déplacement de la position de moulage à la position de retrait et inversement, la plaque de guidage (64) étant fixée à une structure immobile par rapport à la première partie (14) du moule.

10. Dispositif selon la revendication 9, **caractérisé en ce que** le chariot (18) comprend un mécanisme poussoir (34) apte à éjecter de la matière préalablement injectée dans le canal d'injection (38).

11. Dispositif selon la revendication 10, **caractérisé en ce que** le mécanisme poussoir (34) comprend une tige (52) s'étendant entre deux extrémités (54, 56), une première extrémité (54) de la tige (52) délimitant partiellement le canal d'injection (38), la tige (52) étant apte à être poussée en une deuxième extrémité (56) par un actionneur (68).

## Patentansprüche

1. Verfahren zur Herstellung eines Kunststoffteils unter Verwenden einer Einspritzform (12), die aufweist einen ersten (14) und einen zweiten (16) Teil, die zwischen sich eine Formkavität (26) definieren, und einen Schlitten (18), der eine Klinge (32) aufweist, wobei der Schlitten einen Körper (30) aufweist, wobei der Körper (30) ein Volumen (48) begrenzt, das konfiguriert ist zum Aufnehmen der Klinge (32), und die Klinge (32) an dem Körper (30) montiert ist auf Niveau des Volumens (48), wobei der Schlitten (18) und der zweite Teil (16) zwischen sich einen Einspritzkanal (38) definieren, wobei der Einspritzkanal (38) einen Materialeingang (42) aufweist, wobei die Formkavität (26) und der Einspritzkanal (38) in einem Kontaktbereich (28) kommunizieren, wobei das Verfahren die folgenden Schritte aufweist:
- Einspritzen von Kunststoff in den Einspritzkanal (38) und die Formkavität (26) über den Materialeingang (42),
- Verlagern des Schlittens (18), wobei die Klinge (32) den Kunststoff im Kontaktbereich (28) abschneidet, wobei der Kunststoff, der in die Formkavität (26) eingespritzt wurde, und der Kunststoff, der in den Einspritzkanal (38) eingespritzt wurde, separiert sind nach der Verlagerung des Schlittens (18), wobei der Kunststoff, der vorausgehend in den Einspritzkanal (38) eingespritzt wurde, in Kontakt mit dem Schlitten (18) verbleibt,
wobei das Verfahren ferner eine Führungsplatte (64) verwendet, die vorgesehen ist zum Führen des Schlittens (18) während des Verlagerns, wobei die Führungsplatte (64) an einer Struktur fixiert ist, die relativ zu dem ersten Teil (14) der Form immobil ist.

2. Verfahren gemäß Anspruch 1, **dadurch gekennzeichnet, dass** der Schlitten (18) einen Drückmechanismus (34) aufweist und dass das Verfahren aufweist einen Schritt des Auswerfens des Kunststoffs, der vorausgehend in den Einspritzkanal (38) eingespritzt wurde, mittels des Drückmechanismus (34) nach dem Schritt des Verlagerns des Schlittens (18).

3. Verfahren gemäß Anspruch 2, **dadurch gekennzeichnet, dass** vor dem Auswurfschritt der zweite Teil (16) der Einspritzform (12) von dem ersten Teil (14) der Einspritzform (12) entfernt wird.

4. Verfahren gemäß Anspruch 2 oder 3, **dadurch gekennzeichnet, dass** der Drückmechanismus (34) eine Stange (52) aufweist, die sich zwischen zwei Enden (54, 56) erstreckt, wobei ein erstes Ende (54) der Stange (52) den Einspritzkanal (38) partiell begrenzt, wobei die Stange (52) während des Auswurfschritts an einem zweiten Ende (56) von einem Aktuator (68) gedrückt wird.

5. Verfahren gemäß Anspruch 4, **dadurch gekennzeichnet, dass** die Verlagerung des Schlittens (18) die Stange (52) in der Verlängerung des Aktuators (68) positioniert.

6. Verfahren gemäß Anspruch 4 oder 5, **dadurch gekennzeichnet, dass** eine Feder (60) um die Stange (52) montiert ist, wobei der Aktuator (68) die Feder (60) während des Auswurfschritts komprimiert.

7. Verfahren gemäß irgendeinem der Ansprüche 2 bis 6, **dadurch gekennzeichnet, dass** der Kunststoff, der vorausgehend in den Einspritzkanal (38) eingespritzt wurde, nach dem Auswurfschritt wiederverwendet wird.

8. Verfahren gemäß irgendeinem der vorhergehenden Ansprüche, **dadurch gekennzeichnet, dass** der Einspritzkanal (38) in dem Schlitten (38) ausgeformt ist.

9. Vorrichtung zur Herstellung eines Kunststoffteils, die imstande ist das Verfahren gemäß Anspruch 1 durchzuführen, aufweisend eine Einspritzform (12), die aufweist einen ersten (14) und einen zweiten Teil (16), die zwischen sich eine Formkavität (26) definieren, und einen Schlitten (18), der eine Klinge (32) aufweist, wobei der Schlitten einen Körper (30) aufweist, wobei der Körper (30) ein Volumen (48) begrenzt, das konfiguriert ist zum Aufnehmen der Klinge (32), und die Klinge (32) an dem Körper (30) auf Niveau des Volumens (48) montiert ist, wobei der Schlitten (18) imstande ist, sich zwischen den folgenden Positionen zu verlagern:
- einer Form-Position, in welcher der Schlitten (18) und der zweite Teil (16) zwischen sich einen Einspritzkanal (38) definieren, wobei der Einspritzkanal (38) einen Materialeingang (42) aufweist, wobei die Formkavität (26) und der Einspritzkanal (38) in einem Kontaktbereich (28) kommunizieren, und
- einer Rückzieh-Position, in welcher die Formkavität (26) und der Einspritzkanal (38) separiert sind,
wobei die Klinge (32) den Kontaktbereich (28) durchfährt während des Verlagerns des Schlittens (18), wobei die Vorrichtung eine Führungsplatte (64) aufweist, die vorgesehen ist zum Führen des Schlittens (18) während des Verlagerns von der Form-Position in die Rückzieh-Position und umgekehrt, wobei die Führungsplatte (64) an einer Struktur fixiert ist, die relativ zu dem ersten Teil (14) der Form immobil ist.

10. Vorrichtung gemäß Anspruch 9, **dadurch gekennzeichnet, dass** der Schlitten (18) einen Drückmechanismus (34) aufweist, der imstande ist, das Material auszuwerfen, das vorausgehend in den Einspritzkanal (38) eingespritzt wurde.

11. Vorrichtung gemäß Anspruch 10, **dadurch gekennzeichnet, dass** der Drückmechanismus (34) eine Stange (52) aufweist, die sich zwischen zwei Enden (54, 56) erstreckt, wobei ein erstes Ende (54) der Stange (52) den Einspritzkanal (38) partiell begrenzt, wobei die Stange (52) imstande ist, von einem Aktuator (68) an einem zweiten Ende (56) gedrückt zu werden.

## Claims

1. Method for producing a plastics part, using an injection mould (12) comprising first (14) and second (16) parts defining between them a moulding cavity (26), and a carriage (18) comprising a blade (32), the carriage comprising a body (30), the body (30) delimiting a space (48) configured to receive the blade (32) and the blade (32) being mounted on the body (30) at the level of the space (48), the carriage (18) and the second part (16) defining between them an injection channel (38), the injection channel (38) comprising a material inlet (42), the moulding cavity (26) and the injection channel (38) communicating in a contact zone (28), the method comprising the following steps:
- injection of plastics material into the injection channel (38) and the moulding cavity (26) through the material inlet (42),
- movement of the carriage (18), the blade (32) cutting the plastics material at the contact zone (28), the plastics material injected into the moulding cavity (26) and the plastics material injected into the injection channel (38) being separated after the movement of the carriage (18), the plastics material previously injected into the injection channel (38) remaining in contact with the carriage (18),
the method further using a guide plate (64) provided to guide the carriage (18) during the movement, the guide plate (64) being fixed to a structure which is stationary relative to the first part (14) of the mould.

2. Method according to claim 1, **characterised in that** the carriage (18) comprises a pusher mechanism (34), and **in that** the method comprises a step of ejection of the plastics material previously injected into the injection channel (38) by the pusher mechanism (34) after the step of movement of the carriage (38).

3. Method according to claim 2, **characterised in that** the second part (16) of the injection mould (12) is moved away from the first part (14) of the injection mould (12) before the ejection step.

4. Method according to claim 2 or 3, **characterised in that** the pusher mechanism (34) comprises a rod (52) extending between two ends (54, 56), a first end (54) of the rod (52) delimiting part of the injection channel (38), the rod (52) being pushed at a second end (56) by an actuator (68) during the ejection step.

5. Method according to claim 4, **characterised in that** the movement of the carriage (18) places the rod (52) so that it forms a continuation of the actuator (68).

6. Method according to either claim 4 or claim 5, **characterised in that** a spring (60) is mounted around the rod (52), the actuator (68) compressing the spring (60) during the ejection step.

7. Method according to any one of claims 2 to 6, **characterised in that** the plastics material previously injected into the injection channel (38) is reused after the ejection step.

8. Method according to any one of the preceding claims, **characterised in that** the injection channel (38) is hollowed out of the carriage (18).

9. Apparatus for producing a plastics part, capable of carrying out the method according to claim 1, comprising an injection mould (12) comprising first (14) and second (16) parts defining between them a moulding cavity (26), and a carriage (18) comprising a blade (32), the carriage comprising a body (30), the body (30) delimiting a space (48) configured to receive the blade (32) and the blade (32) being mounted on the body (30) at the level of the space (48), the carriage (18) being capable of moving between the following positions:
- a moulding position, in which the carriage (18) and the second part (16) define between them an injection channel (38), the injection channel (38) comprising a material inlet (42), the moulding cavity (26) and the injection channel (38) communicating in a contact zone (28), and
- a retracted position, in which the moulding cavity (26) and the injection channel (38) are separated,
the blade (32) passing through the contact zone (28) during the movement of the carriage (18), the device comprising a guide plate (64) provided to guide the carriage (18) during the movement from the moulding position to the retracted position and *vice versa,* the guide plate (64) being fixed to a structure which is stationary relative to the first part (14) of the mould.

10. Apparatus according to claim 9, **characterised in that** the carriage (18) comprises a pusher mechanism (34) capable of ejecting material previously injected into the injection channel (38).

11. Apparatus according to claim 10, **characterised in that** the pusher mechanism (34) comprises a rod (52) extending between two ends (54, 56), a first end (54) of the rod (52) delimiting part of the injection channel (38), the rod (52) being capable of being pushed at a second end (56) by an actuator (68).
